(19) Europäisches Patentamt / European Patent Office / Office européen des brevets

(11) **EP 4 059 737 B1**

(12) **EUROPEAN PATENT SPECIFICATION**

(45) Date of publication and mention
of the grant of the patent:
**03.07.2024 Bulletin 2024/27**

(21) Application number: **22159857.6**

(22) Date of filing: **03.03.2022**

(51) International Patent Classification (IPC):
**B60C 1/00** *(2006.01)*      **B60C 11/03** *(2006.01)*
**B60C 11/00** *(2006.01)*

(52) Cooperative Patent Classification (CPC):
**B60C 11/0075; B60C 1/0016; B60C 11/033;**
B60C 11/0302; B60C 2011/0344; B60C 2011/0346;
B60C 2011/0374; B60C 2011/0381;
B60C 2011/0386; B60C 2200/10

(54) **MOTORCYCLE TIRE**

MOTORRADREIFEN

PNEUMATIQUE DE MOTOCYCLETTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.03.2021 JP 2021044808**

(43) Date of publication of application:
**21.09.2022 Bulletin 2022/38**

(73) Proprietor: **Sumitomo Rubber Industries, Ltd.
Kobe-shi, Hyogo-ken 651-0072 (JP)**

(72) Inventor: **IKAI, Takuma
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2019/117173**      JP-A- 2009 298 387
JP-A- 2011 189 808      JP-A- 2020 132 139

**Description**

TECHNICAL FIELD

The present invention relates to a motorcycle tire.

BACKGROUND ART

The road-contacting portion of the tread rubber of a motorcycle tire when running straight is different from that when turning. When running straight, the center rubber mainly contacts the road surface, while when turning the shoulder rubber mainly contacts the road surface. Since appropriate performance according to the particular situation is required, the center and shoulder rubbers of the tread rubber are often designed to have different rubber physical properties from each other.

A motorcycle tire according to the preamble of claim 1 is disclosed in WO 2019/117173 A1. Further motorcycle tires are disclosed in JP 2020 132139 A, JP 2009 298387 A and JP 2011 189808 A.

SUMMARY

TECHNICAL PROBLEM

In general, in order to improve grip performance during cornering (turning), it is desirable to soften the shoulder rubbers to increase adhesion to the road surface. However, when running on a continuous straight road, the shoulder rubbers that are not in contact with the road surface, unlike the center rubber, are less likely to be warmed and become hard as the rubber temperature decreases. This raises concerns about cornering after running on a continuous straight road.

The present invention aims to solve the above problem and provide a motorcycle tire with improved cornering grip after running on a continuous straight road.

SOLUTION TO PROBLEM

The present invention relates to a motorcycle tire as claimed.

ADVANTAGEOUS EFFECTS

The present invention provides a motorcycle tire having a tread portion including a tread rubber that is divided into at least three parts in the tire width direction. The tread rubber includes a center rubber at its center, as viewed in the tire width direction, and shoulder rubbers respectively on opposite sides of the center rubber, as viewed in the tire width direction. The center and shoulder rubbers each have a silica content of 80 parts by mass or more per 100 parts by mass of the rubber components, and satisfy relationships (1), (2), and (3) with respect to the silica content (Sc) of the center rubber and the silica content (Ss) of the shoulder rubbers, the plasticizer content (Pc) of the center rubber and the plasticizer content (Ps) of the shoulder rubbers, and the negative ratio (Nc) of the center rubber and the negative ratio (Ns) of the shoulder rubbers, respectively. Thus, the motorcycle tire provides improved cornering grip after running on a continuous straight road.

BRIEF DESCRIPTION OF DRAWINGS

Fig. 1 is a meridional cross-sectional view of a motorcycle tire according to an embodiment of the present invention including the rotational axis of the tire.
Fig. 2 is a developed plan view showing a tread pattern of a motorcycle tire according to an embodiment of the present invention.
Fig. 3 is a front view showing the attitude of a tire running in a tilted position.

DESCRIPTION OF EMBODIMENTS

The motorcycle tire of the present invention has a tread portion including a tread rubber that is divided into at least three parts in the tire width direction. The tread rubber includes a center rubber at its center, as viewed in the tire width direction, and shoulder rubbers respectively on opposite sides of the center rubber, as viewed in the tire width direction. The center and shoulder rubbers each have a silica content of 80 parts by mass or more per 100 parts by mass of the rubber components, and satisfy relationships (1), (2), and (3) with respect to the silica content (Sc) of the center rubber and the silica content (Ss) of the shoulder rubbers, the plasticizer content (Pc) of the center rubber and the plasticizer content (Ps) of the shoulder rubbers, and the negative ratio (Nc) of the center rubber and the negative ratio (Ns) of the shoulder rubbers, respectively. Such a tire has improved cornering grip after running on a continuous straight road.

The reason for such an advantageous effect (mechanism) is not clear but is believed to be as follows.

By adding 80 parts or more of silica to both the center and shoulder rubbers, heat build-up is increased. Further, it is considered that increasing the silica content of the center rubber compared to that of the shoulder rubbers allows the center rubber to generate more heat than the shoulder rubbers, and at the same time increasing the negative ratio of the center rubber compared to that of the shoulder rubbers facilitates heat generation by the center rubber and transfer of the generated heat to the shoulder rubbers. Thus, it is considered that even when running on a continuous straight road, the shoulder rubbers are sufficiently warmed and can easily adhere to the road surface. Further, it is considered that by reducing the plasticizer content of the center rubber compared to that of the shoulder rubbers, it is possible to sufficiently transfer the heat generated in the center rubber to the shoulder rubbers, thereby sufficiently warming the shoulder rubbers. The above mechanism is believed to improve cornering grip after running on a continuous straight road.

As described above, the motorcycle tire solves the problem (purpose) of improving cornering grip after running on a continuous straight road by formulating a motorcycle tire having a tread portion including a tread rubber divided into at least three parts in the tire width direction to satisfy "the center and shoulder rubbers each having a silica content of 80 parts by mass or more", "Sc > Ss", "Pc < Ps", and "Nc > Ns". In other words, the parameters: "the center and shoulder rubbers each having a silica content of 80 parts by mass or more", "Sc > Ss", "Pc < Ps", and "Nc > Ns" do not define the problem (purpose), and the problem herein is to improve cornering grip after running on a continuous straight road. In order to solve this problem, the motorcycle tire has been formulated to satisfy the parameters.

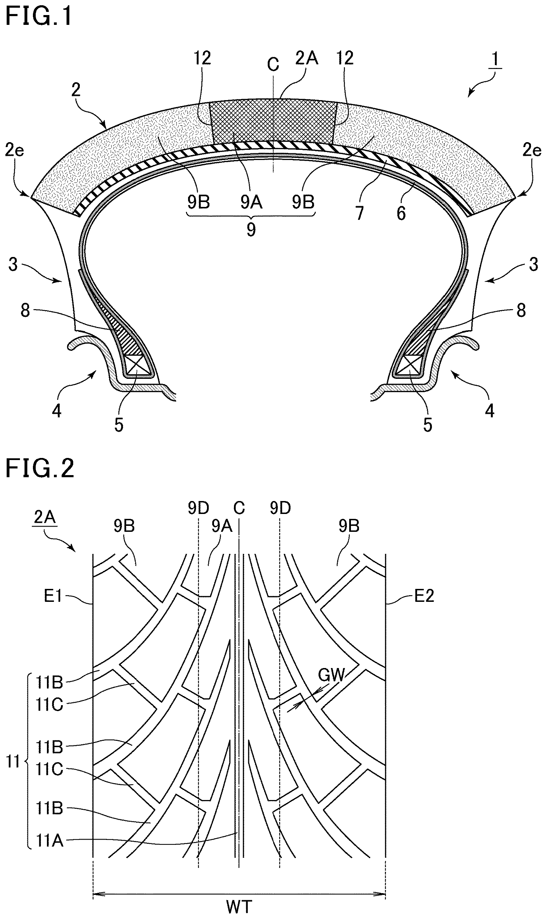

An exemplary motorcycle tire according to an embodiment of the present invention is described below with reference to the drawings. Fig. 1 is a meridional cross-sectional view of the motorcycle tire according to an embodiment of the present invention including the rotational axis of the tire.

The motorcycle tire 1 includes a carcass 6 extending from a tread portion 2 via a sidewall portion 3 to a bead core 5 of a bead portion 4, and a belt layer 7 disposed outwardly of the carcass 6 and inwardly of the tread portion 2 with respect to the tire radial direction.

In the cross-section, a tread face 2A, which contacts the road surface, of the tread portion 2 extends while curving in an arc shape protruding outwardly in the tire radial direction. Moreover, tread edges 2e respectively defining the outer ends of the tread face 2A, as viewed in the tire axial direction, are located on the axially outermost sides.

The tread portion 2 includes a tread rubber 9 located radially outward of the belt layer 7. The tread rubber 9 in this embodiment constitutes a portion extending from the outer surface of the belt layer 7 to the tread face 2A. Moreover, the tread rubber 9 of this embodiment is provided with divided tread parts disposed in the tire width direction. Here, the divided tread parts are formed of two rubber compositions having different formulations.

Specifically, the tread rubber includes a center rubber 9A centered at a tire equator C and a pair of shoulder rubbers 9B each adjoining the center rubber 9A and extending to the tread edge 2e. In other words, when viewed from the vicinity of the tire equator C towards either widthwise side of the tire, two types of rubbers, i.e., the center rubber 9A and the shoulder rubber 9B are disposed side by side. Although here the center rubber 9A and the shoulder rubbers 9B are separated by normal lines 12 drawn from the tread face 2A, they may be separated by, for example, border lines extending from the tread face 2A towards the belt layer 7 while inclining outwardly or inwardly in the tire axial direction.

Although this embodiment is described regarding the tread rubber 9 that consists of divided tread parts of two types (center rubber 9A and shoulder rubbers 9B), the number of types of divided tread parts is not limited, and may be three or five, for example.

Fig. 2 is a developed plan view showing a tread pattern of a motorcycle tire according to an embodiment of the present invention. In Fig. 2, the motorcycle tire 1 has a tread face 2A provided with a plurality of grooves 11.

As shown in Fig. 2, the grooves 11 include: a center longitudinal groove 11A extending circumferentially along a tire equator C; beveled grooves 11B extending symmetrically in an inverted V-like configuration from the vicinity of the tire equator C to either one end edge E1 or the other end edge E2 of the tread portion 2 as an opening end, and disposed side by side in the tire circumferential direction; and bypass grooves 11C each connecting two beveled grooves 11B and 11B adjacent to each other in the circumferential direction.

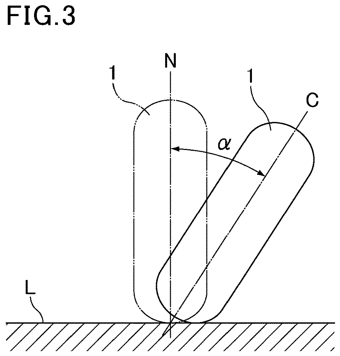

The tread face 2A having a tread pattern including these grooves 11 allows the tire 1 to have a predetermine range of contact area (not shown) when the tire 1 in a normal state (where the tire is mounted on a normal rim J and subjected to a specified normal internal pressure and a specified normal maximum load) contacts the road surface L at a predetermined camber angle $\alpha$. The term "camber angle $\alpha$" refers to the inclination of the tire equator C with respect to the normal N to the ground contact surface L as shown in Fig. 3.

The grooves 11 desirably have a groove width GW in the range of 0.04 to 0.12 times the tread width WT, and a groove depth GH (not shown) in the range of 0.06 to 0.18 times the tread width WT.

The motorcycle tire 1 satisfies the following relationship (3) with respect to the negative ratio (Nc) of the center rubber 9A and the negative ratio (Ns) of the shoulder rubbers 9B:

$$(3) \quad Nc > Ns.$$

The ratio Nc/Ns is preferably 1.3 or higher, more preferably 1.5 or higher, still more preferably 1.8 or higher, particularly preferably 2.0 or higher. The upper limit of the ratio Nc/Ns is preferably 5.0 or lower, more preferably 4.5 or lower, still more preferably 4.0 or lower, particularly preferably 3.5 or lower. When the ratio is within the range indicated above, the advantageous effect tends to be better achieved.

The term "negative ratio" refers to the ratio of the total groove area to the total area within the ground contact width of the tread. Herein, it is the groove ratio (%) calculated by dividing the area of the grooves by the entire ground contact area as determined when the tire under a normal internal pressure and a normal load is pressed. The negative ratio (Nc) of the center rubber 9A is the groove ratio (%) determined at a camber angle of 0 degrees, and the negative ratio (Ns) of the shoulder rubbers 9B is the groove ratio (%) determined at a camber angle of 40 degrees.

The negative ratio (Nc) of the center rubber 9A is preferably 5% or higher, more preferably 10% or higher, still more preferably 15% or higher, particularly preferably 16% or higher, but is preferably 40% or lower, more preferably 35% or lower, still more preferably 30% or lower, particularly preferably 25% or lower. When Nc is within the range indicated above, the advantageous effect tends to be better achieved.

The negative ratio (Ns) of the shoulder rubbers 9B is preferably 3% or higher, more preferably 5% or higher, still more preferably 7% or higher, particularly preferably 8% or higher, but is preferably 30% or lower, more preferably 20% or lower, still more preferably 15% or lower, particularly preferably 10% or lower. When Ns is within the range indicated above, the advantageous effect tends to be better achieved.

The motorcycle tire 1 preferably has a groove 11 which passes through the boundary 9D between the center rubber 9A and the shoulder rubber 9B and which does not reach the tire equator C. In Fig. 2, provided are grooves 11 which include beveled grooves 11B and bypass grooves 11C each connecting two beveled grooves 11B and 11B, and which cross the boundary 9D between the center rubber 9A and the shoulder rubber 9B and do not reach the tire equator C. It is considered that such grooves extending from the center rubber to the shoulder rubber facilitate heat generation by the center rubber and transfer of the generated heat to the shoulder rubbers. Thus, it is believed that even when running on a continuous straight road, the shoulder rubbers are sufficiently warmed and can easily adhere to the road surface, thereby improving cornering grip after running on a continuous straight road.

(Chemicals)

Chemicals that may be used in the center rubber composition forming the center rubber and the shoulder rubber composition forming the shoulder rubbers are described below.

Examples of rubber components that may be used in the center or shoulder rubber composition include isoprene-based rubbers such as polyisoprene rubbers (IR), epoxidized polyisoprene rubbers, hydrogenated polyisoprene rubbers, grafted polyisoprene rubbers, natural rubbers (NR), deproteinized natural rubbers (DPNR), highly purified natural rubbers (UPNR), epoxidized natural rubbers (ENR), hydrogenated natural rubbers (HNR), and grafted natural rubbers; polybutadiene rubbers (BR), styrene-butadiene rubbers (SBR), styrene-isoprene-butadiene rubbers (SIBR), ethylene-propylene-diene rubbers (EPDM), chloroprene rubbers (CR), acrylonitrile-butadiene rubbers (NBR), and butyl-based rubbers.

These rubbers may be either unmodified or modified rubbers. Examples of the modified rubbers include rubbers having functional groups interactive with fillers. Examples of the functional groups include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may be substituted. Preferred among these are amino (preferably amino whose hydrogen atom is replaced with a C1-C6 alkyl group), alkoxy (preferably C1-C6 alkoxy), alkoxysilyl (preferably C1-C6 alkoxysilyl), and amide groups. These rubber components may be used alone or in combinations of two or more.

The center or shoulder rubber composition contains a filler.

The center or shoulder rubber composition contains silica as a filler. Examples of other usable fillers include materials known in the rubber field, including inorganic fillers such as carbon black, calcium carbonate, talc, alumina, clay, aluminum hydroxide, aluminum oxide, and mica; and hardly dispersible fillers. Carbon black is preferred among these.

Examples of silica usable in the center or shoulder rubber composition include dry silica (anhydrous silica) and wet silica (hydrous silica). Wet silica is preferred among these because it contains a large number of silanol groups. The silica may be commercially available from Degussa, Rhodia, Tosoh Silica Corporation, Solvay Japan, Tokuyama Corporation, etc.

When the composition contains silica, it preferably contains a silane coupling agent together with the silica.

Any silane coupling agent conventionally used with silica in the rubber industry may be used in the center or shoulder rubber composition. Non-limiting examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as $\gamma$-glycidoxypropyltriethoxysilane and $\gamma$-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more. Sulfide or mercapto silane coupling agents are preferred among these.

Examples of carbon black usable in the center or shoulder rubber composition include N134, N110, N220, N234, N219, N339, N330, N326, N351, N550, and N762. These may be used alone or in combinations of two or more. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc.

The center or shoulder rubber composition preferably contains a plasticizer.

Herein, the term "plasticizer" refers to a material which can impart plasticity to rubber components. Non-limiting examples of the plasticizer include oils, liquid plasticizers which have plasticity and are liquid at 25°C, such as liquid resins, and solid plasticizers which have plasticity and are solid at 25°C, such as resins (polymers (solid resins) that are solid at 25°C). These plasticizers may be used alone or in combinations of two or more.

Any oil may be used, and examples include conventional oils, including: process oils such as paraffinic process oils, aromatic process oils, and naphthenic process oils; low PCA (polycyclic aromatic) process oils such as TDAE and MES; plant oils; and mixtures thereof. Usable commercial oils include Diana Process Oil AH series available from Idemitsu Kosan Co., Ltd.

Any liquid resin may be used, and examples include liquid aromatic vinyl polymers, coumarone-indene resins, indene resins, terpene resins, rosin resins, and hydrogenated products thereof.

Examples of the liquid aromatic vinyl polymers include resins produced by polymerization of $\alpha$-methylstyrene and/or styrene. Specific examples include liquid resins such as styrene homopolymers, $\alpha$-methylstyrene homopolymers, and copolymers of $\alpha$-methylstyrene and styrene.

Examples of the liquid coumarone-indene resins include resins that contain coumarone and indene as the main monomer components forming the backbone (main chain) of the resins. Examples of monomer components which may be contained in the backbone in addition to coumarone and indene include styrene, $\alpha$-methylstyrene, methylindene, and vinyltoluene.

Examples of the liquid indene resins include liquid resins that contain indene as the main monomer component forming the backbone (main chain) of the resins.

Examples of the liquid terpene resins include liquid terpene resins typified by resins produced by polymerization of terpene compounds such as $\alpha$-pinene, $\beta$-pinene, camphene, or dipentene, and terpene phenol resins produced from terpene compounds and phenolic compounds.

Examples of the liquid rosin resins include liquid rosin resins typified by natural rosins, polymerized rosins, modified rosins, and esterified or hydrogenated products thereof.

Non-limiting examples of the resins (solid resins which are solid at 25°C) include solid styrene resins, coumarone-indene resins, terpene resins, p-t-butylphenol acetylene resins, acrylic resins, dicyclopentadiene resins (DCPD resins), C5 petroleum resins, C9 petroleum resins, and C5/C9 petroleum resins. These may be used alone or in combinations of two or more.

"Solid styrene resins" refer to solid polymers produced from styrenic monomers as structural monomers, and examples include polymers produced by polymerization of styrenic monomers as main components (at least 50% by mass). Specific examples include homopolymers produced by polymerization of single styrenic monomers (e.g., styrene, o-methylstyrene, m-methylstyrene, p-methylstyrene, $\alpha$-methylstyrene, p-methoxystyrene, p-tert-butylstyrene, p-phenylstyrene, o-chlorostyrene, m-chlorostyrene, or p-chlorostyrene), copolymers produced by copolymerization of two or more styrenic monomers, and copolymers of styrenic monomers and additional monomers copolymerizable therewith. Examples of the additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene; olefins such as 1-butene and 1-pentene; and $\alpha,\beta$-unsaturated carboxylic acids and acid anhydrides thereof such as maleic anhydride.

Examples of the solid coumarone-indene resins include solid resins having structural units as described above for the liquid coumarone-indene resins.

Examples of the solid terpene resins include polyterpene, terpene phenol, and aromatic modified terpene resins. Examples of the solid polyterpene resins include solid terpene resins made from terpene compounds, such as $\alpha$-pinene resins, $\beta$-pinene resins, limonene resins, dipentene resins, and $\beta$-pinene-limonene resins, as well as solid hydrogenated terpene resins produced by hydrogenation of these terpene resins. Examples of the solid terpene phenol resins include solid resins produced by copolymerization of terpene compounds and phenolic compounds, and solid resins produced by hydrogenation of these resins. Specific examples include solid resins produced by condensation of terpene compounds, phenolic compounds, and formaldehyde. Examples of the solid aromatic modified terpene resins include solid resins produced by modification of terpene resins with aromatic compounds, and solid resins produced by hydrogenation of these resins.

Examples of the solid p-t-butylphenol acetylene resins include solid resins produced by condensation of p-t-butylphenol and acetylene.

Non-limiting example of the solid acrylic reins include solvent-free acrylic solid resins. Examples of the monomer components of the solid acrylic resins include (meth)acrylic acids and (meth)acrylic acid derivatives such as (meth)acrylic acid esters (e.g., alkyl esters, aryl esters, and aralkyl esters), (meth)acrylamides, and (meth)acrylamide derivatives. In addition to the (meth)acrylic acids or (meth)acrylic acid derivatives, aromatic vinyls, such as styrene, $\alpha$-methylstyrene, vinyltoluene, vinylnaphthalene, divinylbenzene, trivinylbenzene, or divinylnaphthalene, may also be used as the monomer components of the solid acrylic resins. The solid acrylic resins may be formed only of (meth)acrylic components or may further contain constituent components other than the (meth)acrylic components. Moreover, the solid acrylic resins may have a hydroxy group, a carboxyl group, a silanol group, or other groups.

The center or shoulder rubber composition preferably contains sulfur.

Examples of the sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc.

The center or shoulder rubber composition preferably contains a vulcanization accelerator.

Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Sulfenamide and/or guanidine vulcanization accelerators are preferred among these.

The center or shoulder rubber composition may contain a wax, an antioxidant, stearic acid, zinc oxide, a vulcanizing agent other than sulfur (e.g., an organic crosslinking agent), and/or other components.

The tire satisfies the following relationship (1) with respect to the silica content (Sc) of the center rubber and the silica content (Ss) of the shoulder rubbers:

$$(1) \quad Sc > Ss.$$

The lower limit of the ratio Sc/Ss is preferably 1.10 or higher, more preferably 1.11 or higher, still more preferably 1.13 or higher. The lower limit may be 1.22 or higher or 1.25 or higher. The upper limit of the ratio Sc/Ss is preferably 1.50 or lower, more preferably 1.40 or lower, still more preferably 1.38 or lower, particularly preferably 1.35 or lower. The upper limit may be 1.30 or lower. When the ratio is within the range indicated above, the advantageous effect tends to be better achieved.

The tire satisfies the following relationship (2) with respect to the plasticizer content (Pc) of the center rubber and the plasticizer content (Ps) of the shoulder rubbers:

$$(2) \quad Pc < Ps.$$

The lower limit of the ratio Ps/Pc is preferably 1.00 or higher, more preferably 1.03 or higher, still more preferably 1.05 or higher, particularly preferably 1.07 or higher. The upper limit of the ratio Ps/Pc is preferably 1.30 or lower, more preferably 1.21 or lower, still more preferably 1.16 or lower, particularly preferably 1.14 or lower, most preferably 1.13 or lower. The upper limit may be 1.12 or lower or 1.11 or lower. When the ratio is within the range indicated above, the advantageous effect tends to be better achieved.

The lower limit of the value of "(Sc/Ss) × (Ps/Pc) × (Nc/Ns)" is preferably 1.80 or more, more preferably 1.87 or more, still more preferably 2.00 or more, particularly preferably 2.06 or more, most preferably 2.29 or more. The upper limit of the value of "(Sc/Ss) × (Ps/Pc) × (Nc/Ns)" is preferably 3.00 or less, more preferably 2.52 or less, still more preferably 2.45 or less, particularly preferably 2.40 or less. When the value is within the range indicated above, the advantageous effect tends to be better achieved.

[Center rubber (center rubber composition)]

From the standpoint of cornering grip after running on a continuous straight road, the center rubber composition forming the center rubber preferably contains the above-described SBR as a rubber component.

Any SBR may be used, and examples include emulsion-polymerized styrene-butadiene rubbers (E-SBR) and solution-polymerized styrene-butadiene rubbers (S-SBR). Usable commercial products are available from Sumitomo Chemical Co., Ltd., JSR Corporation, Asahi Kasei Corporation, Zeon Corporation, etc.

The SBR content based on 100% by mass of the rubber components in the center rubber composition is preferably 50% by mass or more, more preferably 70% by mass or more, still more preferably 80% by mass or more, particularly preferably 90% by mass or more, and may be 100% by mass. When the SBR content is within the range indicated above, the advantageous effect tends to be better achieved.

The styrene content of the SBR is preferably 20% by mass or higher, more preferably 30% by mass or higher, still more preferably 35% by mass or higher, particularly preferably 40% by mass or higher. Moreover, the upper limit of the styrene content is preferably 60% by mass or lower, more preferably 55% by mass or lower, still more preferably 50% by mass or lower. When the styrene content is within the range indicated above, the advantageous effect tends to be better achieved.

Herein, the styrene content of the SBR is determined by $^1$H-NMR analysis.

The vinyl content of the SBR is preferably 20% by mass or higher, more preferably 30% by mass or higher, still more preferably 40% by mass or higher, particularly preferably 47% by mass or higher. The vinyl content is preferably 65% by mass or lower, more preferably 60% by mass or lower. When the vinyl content is within the range indicated above, the advantageous effect tends to be better achieved.

The vinyl content (1,2-butadiene unit content) can be measured by infrared absorption spectrometry.

The filler content per 100 parts by mass of the rubber components in the center rubber composition is preferably 90 parts by mass or more, more preferably 100 parts by mass or more, still more preferably 105 parts by mass or more, particularly preferably 110 parts by mass or more. The upper limit is preferably 200 parts by mass or less, more preferably 170 parts by mass or less, still more preferably 150 parts by mass or less. When the filler content is within the range indicated above, the advantageous effect tends to be better achieved.

The silica content per 100 parts by mass of the rubber components in the center rubber composition is 80 parts by mass or more, preferably 90 parts by mass or more, more preferably 95 parts by mass or more, still more preferably 100 parts by mass or more, particularly preferably 110 parts by mass or more. The upper limit of the silica content is preferably 200 parts by mass or less, more preferably 150 parts by mass or less, still more preferably 130 parts by mass or less, particularly preferably 120 parts by mass or less. When the silica content is within the range indicated above, the advantageous effect tends to be better achieved.

In the center rubber composition, the nitrogen adsorption specific surface area ($N_2SA$) of the silica is preferably 80 $m^2/g$ or more, more preferably 120 $m^2/g$ or more, still more preferably 150 $m^2/g$ or more, particularly preferably 175 $m^2/g$ or more. The $N_2SA$ of the silica is also preferably 250 $m^2/g$ or less, more preferably 200 $m^2/g$ or less. When the $N_2SA$ is within the range indicated above, the advantageous effect tends to be better achieved.

The $N_2SA$ of the silica is measured by a BET method in accordance with ASTM D3037-93.

The silane coupling agent content per 100 parts by mass of the silica in the center rubber composition is preferably 1 to 15 parts by mass, more preferably 3 to 10 parts by mass.

The carbon black content per 100 parts by mass of the rubber components in the center rubber composition is preferably 1 part by mass or more, more preferably 5 parts by mass or more, still more preferably 8 parts by mass or more, particularly preferably 10 parts by mass or more. The carbon black content is also preferably 15 parts by mass or less, more preferably 13 parts by mass or less, still more preferably 12 parts by mass or less. When the carbon black content is within the range indicated above, the advantageous effect tends to be better achieved.

In the center rubber composition, the nitrogen adsorption specific surface area ($N_2SA$) of the carbon black is preferably 80 $m^2/g$ or more, more preferably 110 $m^2/g$ or more, still more preferably 130 $m^2/g$ or more, particularly preferably 140 $m^2/g$ or more. The upper limit of the $N_2SA$ of the carbon black is not limited but is preferably 200 $m^2/g$

or less, more preferably 180 m$^2$/g or less, still more preferably 160 m$^2$/g or less.

The nitrogen adsorption specific surface area of the carbon black is determined by a method A in accordance with JIS K 6217.

The percentage of silica based on 100% by mass of the combined amount of silica and carbon black in the center rubber composition is preferably 50% by mass or more, more preferably 80% by mass or more, still more preferably 90% by mass or more. The upper limit of the percentage of silica is preferably 95% by mass or less, more preferably 93% by mass or less. When the percentage of silica is within the range indicated above, the advantageous effect tends to be better achieved.

The plasticizer content (the combined amount of the above-described liquid and solid plasticizers) per 100 parts by mass of the rubber components in the center rubber composition is preferably 20 parts by mass or more, more preferably 30 parts by mass or more, still more preferably 40 parts by mass or more, particularly preferably 45 parts by mass or more. The upper limit of the plasticizer content is preferably 120 parts by mass or less, more preferably 100 parts by mass or less, still more preferably 80 parts by mass or less, particularly preferably 75 parts by mass or less. The upper limit of the plasticizer content may be 69 parts by mass or less, 68 parts by mass or less, or 57 parts by mass or less. When the plasticizer content is within the range indicated above, the advantageous effect tends to be better achieved.

From the standpoint of cornering grip after running on a continuous straight road, the center rubber composition preferably contains any of the above-described liquid plasticizers which have plasticity and are liquid at 25°C, more preferably any of the above-described oils. Paraffinic or aromatic process oils are preferred as the oil used in the center rubber composition.

The liquid plasticizer content per 100 parts by mass of the rubber components in the center rubber composition is preferably 20 parts by mass or more, more preferably 30 parts by mass or more, still more preferably 35 parts by mass or more, particularly preferably 40 parts by mass or more. The upper limit is preferably 100 parts by mass or less, more preferably 70 parts by mass or less, still more preferably 60 parts by mass or less, particularly preferably 50 parts by mass or less. When the liquid plasticizer content is within the range indicated above, the advantageous effect tends to be better achieved. Moreover, the oil content is also desirably within the range as indicated above. The liquid plasticizer or oil content includes the amount of the oils contained in the rubbers (oil extended rubbers), if used.

From the standpoint of cornering grip after running on a continuous straight road, the center rubber composition preferably contains any of the above-described solid plasticizers which have plasticity and are solid at 25°C, more preferably any of the above-described solid resins such as solid styrene or terpene resins.

The solid plasticizer content per 100 parts by mass of the rubber components in the center rubber composition is preferably 1 part by mass or more, more preferably 3 parts by mass or more, still more preferably 5 parts by mass or more. The solid plasticizer content is preferably 30 parts by mass or less, more preferably 20 parts by mass or less, still more preferably 15 parts by mass or less, particularly preferably 10 parts by mass or less. When the solid plasticizer content is within the range indicated above, the advantageous effect tends to be better achieved. Moreover, the solid resin (e.g., solid styrene or terpene resin) content is also desirably within the range as indicated above.

The solid resin used in the center rubber composition preferably has a softening point of 160°C or lower, more preferably 130°C or lower, still more preferably 110°C or lower, particularly preferably 96°C or lower. The lower limit of the softening point is preferably 60°C or higher, more preferably 70°C or higher, still more preferably 80°C or higher, particularly preferably 85°C or higher. When the softening point is within the range indicated above, the advantageous effect tends to be better achieved.

Herein, the softening point of the solid resin is determined in accordance with JIS K 6220-1:2001 using a ring and ball softening point measuring apparatus and defined as the temperature at which the ball drops down.

The center rubber composition preferably contains sulfur.

The sulfur content per 100 parts by mass of the rubber components in the center rubber composition is preferably 0.5 parts by mass or more, more preferably 1.0 parts by mass or more, still more preferably 1.5 parts by mass or more, particularly preferably 2.0 parts by mass or more. The sulfur content is also preferably 7.0 parts by mass or less, more preferably 5.0 parts by mass or less, still more preferably 3.0 parts by mass or less. When the sulfur content is within the range indicated above, the advantageous effect tends to be better achieved.

The center rubber composition preferably contains a vulcanization accelerator.

The vulcanization accelerator content per 100 parts by mass of the rubber components in the center rubber composition is preferably 1.0 parts by mass or more, more preferably 2.0 parts by mass or more, still more preferably 3.0 parts by mass or more, particularly preferably 3.5 parts by mass or more. The vulcanization accelerator content is also preferably 8.0 parts by mass or less, more preferably 6.0 parts by mass or less, still more preferably 4.0 parts by mass or less. When the vulcanization accelerator content is within the range indicated above, the advantageous effect tends to be better achieved.

[Shoulder rubber (shoulder rubber composition)]

From the standpoint of cornering grip after running on a continuous straight road, the shoulder rubber composition forming the shoulder rubbers preferably contains the above-described SBR as a rubber component.

The SBR content based on 100% by mass of the rubber components in the shoulder rubber composition is preferably 50% by mass or more, more preferably 70% by mass or more, still more preferably 80% by mass or more, particularly preferably 90% by mass or more, and may be 100% by mass. When the SBR content is within the range indicated above, the advantageous effect tends to be better achieved.

The SBR used in the shoulder rubber composition suitably has styrene and vinyl contents within the ranges as described for the center rubber composition. Moreover, suitable examples of the SBR used in the shoulder rubber composition include those as described for the center rubber composition.

The filler content per 100 parts by mass of the rubber components in the shoulder rubber composition is preferably 85 parts by mass or more, more preferably 90 parts by mass or more, still more preferably 95 parts by mass or more, particularly preferably 100 parts by mass or more, most preferably 110 parts by mass or more. The upper limit is preferably 200 parts by mass or less, more preferably 170 parts by mass or less, still more preferably 150 parts by mass or less. When the filler content is within the range indicated above, the advantageous effect tends to be better achieved.

The silica content per 100 parts by mass of the rubber components in the shoulder rubber composition is 80 parts by mass or more, preferably 85 parts by mass or more, more preferably 88 parts by mass or more, still more preferably 90 parts by mass or more, particularly preferably 100 parts by mass or more. The upper limit of the silica content is preferably 200 parts by mass or less, more preferably 150 parts by mass or less, still more preferably 130 parts by mass or less, particularly preferably 120 parts by mass or less. When the silica content is within the range indicated above, the advantageous effect tends to be better achieved.

Suitable examples of the silica used in the shoulder rubber composition include those described for the center rubber composition. The silica used in the shoulder rubber composition suitably has a $N_2SA$ within the range as described for the center rubber composition.

The shoulder rubber composition preferably contains a silane coupling agent together with the silica.

The silane coupling agent content in the shoulder rubber composition is also suitably within the range as described for the silane coupling agent content in the center rubber composition.

The carbon black content per 100 parts by mass of the rubber components in the shoulder rubber composition is preferably 1 part by mass or more, more preferably 5 parts by mass or more, still more preferably 8 parts by mass or more, particularly preferably 10 parts by mass or more. The carbon black content is also preferably 15 parts by mass or less, more preferably 13 parts by mass or less, still more preferably 12 parts by mass or less. When the carbon black content is within the range indicated above, the advantageous effect tends to be better achieved.

The carbon black used in the shoulder rubber composition suitably has a $N_2SA$ within the range as described for the center rubber composition.

The percentage of silica based on 100% by mass of the combined amount of silica and carbon black in the shoulder rubber composition is preferably 50% by mass or more, more preferably 80% by mass or more, still more preferably 90% by mass or more. The upper limit of the percentage of silica is preferably 95% by mass or less, more preferably 93% by mass or less. When the percentage of silica is within the range indicated above, the advantageous effect tends to be better achieved.

The plasticizer content (the combined amount of the above-described liquid and solid plasticizers) per 100 parts by mass of the rubber components in the shoulder rubber composition is preferably 20 parts by mass or more, more preferably 30 parts by mass or more, still more preferably 40 parts by mass or more, particularly preferably 45 parts by mass or more. The upper limit of the plasticizer content is preferably 120 parts by mass or less, more preferably 100 parts by mass or less, still more preferably 80 parts by mass or less, particularly preferably 78 parts by mass or less. The upper limit of the plasticizer content may be 77 parts by mass or less, 76 parts by mass or less, 75 parts by mass or less, or 66 parts by mass or less.

When the plasticizer content is within the range indicated above, the advantageous effect tends to be better achieved. In particular, the shoulder rubbers having a high plasticizer content become too hard when they are cooled during straight running, so that the shoulder portions cannot be sufficiently warmed by the heat transferred from the center portion. Thus, it is believed that the plasticizer content may be adjusted to, for example, 80 parts by mass or less, to prevent this problem, thereby improving cornering grip after running on a continuous straight road.

From the standpoint of cornering grip after running on a continuous straight road, the shoulder rubber composition preferably contains any of the above-described liquid plasticizers which have plasticity and are liquid at 25°C, more preferably any of the above-described oils. Paraffinic or aromatic process oils are preferred as the oil used in the shoulder rubber composition.

The liquid plasticizer content per 100 parts by mass of the rubber components in the shoulder rubber composition is preferably 20 parts by mass or more, more preferably 30 parts by mass or more, still more preferably 35 parts by mass or more, particularly preferably 40 parts by mass or more. The upper limit is preferably 100 parts by mass or less, more preferably 80 parts by mass or less, still more preferably 70 parts by mass or less, particularly preferably 60 parts by mass or less. When the liquid plasticizer content is within the range indicated above, the advantageous effect tends to be better achieved. Moreover, the oil content is also desirably within the range as indicated above. The liquid plasticizer or oil content includes the amount of the oils contained in the rubbers (oil extended rubbers), if used.

From the standpoint of cornering grip after running on a continuous straight road, the shoulder rubber composition preferably contains any of the above-described solid plasticizers which have plasticity and are solid at 25°C, more preferably any of the above-described solid resins such as solid styrene or terpene resins.

The solid plasticizer content per 100 parts by mass of the rubber components in the shoulder rubber composition is preferably 1 part by mass or more, more preferably 3 parts by mass or more, still more preferably 5 parts by mass or more. The solid plasticizer content is preferably 30 parts by mass or less, more preferably 20 parts by mass or less, still more preferably 15 parts by mass or less, particularly preferably 10 parts by mass or less. When the solid plasticizer content is within the range indicated above, the advantageous effect tends to be better achieved. Moreover, the solid resin (e.g., solid styrene or terpene resin) content is also desirably within the range as indicated above.

Suitable examples of such solid resins that may be used in the shoulder rubber composition include those described for the center rubber composition. When the shoulder rubber composition contains a solid resin, the solid resin suitably has a softening point within the range as described for the center rubber composition.

The shoulder rubber composition preferably contains sulfur.

The sulfur content per 100 parts by mass of the rubber components in the shoulder rubber composition is preferably 0.5 parts by mass or more, more preferably 1.0 parts by mass or more, still more preferably 1.5 parts by mass or more, particularly preferably 2.0 parts by mass or more. The sulfur content is also preferably 7.0 parts by mass or less, more preferably 5.0 parts by mass or less, still more preferably 3.0 parts by mass or less. When the sulfur content is within the range indicated above, the advantageous effect tends to be better achieved.

The shoulder rubber composition preferably contains a vulcanization accelerator.

The vulcanization accelerator content per 100 parts by mass of the rubber components in the shoulder rubber composition is preferably 1.0 parts by mass or more, more preferably 2.0 parts by mass or more, still more preferably 3.5 parts by mass or more. The vulcanization accelerator content is also preferably 8.0 parts by mass or less, more preferably 6.0 parts by mass or less, still more preferably 4.0 parts by mass or less. When the vulcanization accelerator content is within the range indicated above, the advantageous effect tends to be better achieved.

The shoulder rubber composition may contain a wax, an antioxidant, stearic acid, zinc oxide, sulfur, a vulcanization accelerator, and/or an organic crosslinking agent. For example, those described for the center rubber composition may be suitably used. When the shoulder rubber composition contains these materials, their contents are suitably within the ranges as described for the center rubber composition.

The center or shoulder rubber composition can be prepared by general methods. Specifically, it may be prepared, for example, by kneading the components in a Banbury mixer, kneader, open roll mill, or other device and then vulcanizing the kneaded mixture.

The kneading conditions of the center or shoulder rubber composition are as follows. In a base kneading step of kneading additives other than vulcanizing agents and vulcanization accelerators, the kneading temperature is usually 50 to 200°C, preferably 80 to 190°C, and the kneading time is usually 30 seconds to 30 minutes, preferably 1 to 30 minutes. In a final kneading step of kneading vulcanizing agents and/or vulcanization accelerators, the kneading temperature is usually 100°C or lower, preferably from room temperature to 80°C. Then, the composition obtained by kneading vulcanizing agents and/or vulcanization accelerators is usually vulcanized by, for example, press vulcanization. The vulcanization temperature is usually 120 to 200°C, preferably 140 to 180°C.

The motorcycle tire of the present invention can be produced from the center and shoulder rubber compositions by usual methods. Specifically, the unvulcanized center and shoulder rubber compositions containing the components may be extruded into the shapes of center and shoulder rubbers, respectively, and then assembled with other tire components in a usual manner on a tire building machine to build an unvulcanized tire. The unvulcanized tire may be heated and pressurized in a vulcanizer to produce a tire.

EXAMPLES

The present invention is specifically described with reference to examples, but is not limited thereto.

The chemicals used in the examples and comparative examples are listed below.

SBR: Tufdene 4850 (S-SBR, styrene content: 40% by mass, vinyl content: 47% by mass, oil extended rubber containing 50 parts by mass of oil per 100 parts by mass of rubber solids) available from Asahi Kasei Corporation
BR: UBEPOL BR 150B (high-cis BR synthesized using Co catalyst) available from Ube Industries, Ltd.

Carbon black: SHOBLACK N110 ($N_2SA$: 142 m$^2$/g) available from CABOT JAPAN K.K.

Silica: ULTRASIL VN3 ($N_2SA$: 175 m$^2$/g) available from Evonik

Silane coupling agent: Si69 (bis(3-triethoxysilylpropyl)tetrasulfide) available from Evonik

Oil: Diana Process NH-70 (aromatic process oil) available from Idemitsu Kosan Co., Ltd.

Styrene resin: Sylvatraxx 4401 (a copolymer of α-methylstyrene and styrene, softening point: 85°C, Tg: 43°C) available from Arizona Chemical

Terpene resin: Sylvatraxx 4150 (softening point: 115°C) available from Arizona Chemical

Wax: Ozoace 0355 available from Nippon Seiro Co., Ltd.

Antioxidant: Antigene 6C (N-(1,3-dimethylbutyl)-N'-phenyl-p-phenylenediamine) available from Sumitomo Chemical Co., Ltd.

Stearic acid: TSUBAKI available from NOF Corporation

Zinc oxide: Ginrei R available from Toho Zinc Co., Ltd.

Sulfur: HK-200-5 (5% oil-containing powdered sulfur) available from Hosoi Chemical Industry Co., Ltd.

Vulcanization accelerator 1: NOCCELER NS-G (N-tert-butyl-2-benzothiazylsulfenamide) available from Ouchi Shinko Chemical Industrial Co., Ltd.

Vulcanization accelerator 2: NOCCELER D (1,3-diphenylguanidine) available from Ouchi Shinko Chemical Industrial Co., Ltd.

(Examples and Comparative Examples)

According to the formulation recipe shown in each table, the chemicals other than the sulfur and vulcanization accelerators were kneaded in a Banbury mixer at 60 rpm for four minutes to give a kneaded mixture. To the kneaded mixture were then added the sulfur and vulcanization accelerators, and they were kneaded in an open two roll mill to give an unvulcanized rubber sheet (thickness: 4 mm). According to the specification shown in each table, the unvulcanized rubber sheet was processed into the shape of a tread rubber (center or shoulder rubber) and then assembled with other tire components and vulcanized at 170°C for 15 minutes to prepare a test tire having a structure as illustrated in Figs. 1 and 2.

The test tires prepared as above were evaluated as described below. The tables show the results.

<Negative groove area ratio (groove ratio)>

The groove ratio (%) of each test tire was calculated by dividing the area of the grooves by the entire ground contact area as determined when the tire mounted on a normal rim and under an internal pressure of 290 kPa and a load of 1.3 kN was pressed. The negative groove area ratio (Nc) of the center rubber part and the negative groove area ratio (Ns) of the shoulder rubber parts were defined (determined) as the groove ratio (%) determined at a camber angle of 0 degrees and the groove ratio (%) determined at a camber angle of 40 degrees, respectively.

<Cornering grip after running on continuous straight road>

The test tires were mounted on the test vehicle described below, and the grip of the tire (rear tire) was evaluated on the vehicle. The time measured when the vehicle was driven in a circuit having a ratio of straight road:corners of 20:1 was compared to that of a reference tire using the equation below to determine a relative value indicating how much the time was reduced. The reference tire was a commercial tire which did not correspond to the present invention and which had the slowest time. A higher relative value indicates better cornering grip of the tire (rear tire) after running on a continuous straight road.

(Index of cornering grip after running on continuous straight road) = [(Running time of reference tire - Running time of test tire of each example) / (Running time of reference titre - Running time of Comparative Example 1)] × 100

(Test vehicle)

Motorcycle with a displacement of 750 cc

Tire (front tire, rear tire): 120/70ZR17, 180/55ZR17

Rim: (front tire) MT 3.50 × 17, (rear tire) MT 5.50 × 17

Internal pressure: (front tire) 250 kPa, (rear tire) 290 kPa

[Table 1]

| Formulation (parts by mass) | | Example 1 | | Example 2 | | Example 3 | | Example 4 | | Example 5 | | Example 6 | | Example 7 | |
|---|---|---|---|---|---|---|---|---|---|---|---|---|---|---|---|
| | | Center | Shoulder | Center | Shoulder | Center | Shoulder | Center | Shoulder | Center | Shoulder | Center | Shoulder | Center | Shoulder |
| | SBR | 150 | 150 | 150 | 150 | 150 | 150 | 150 | 150 | 150 | 150 | 150 | 150 | 150 | 150 |
| | Carbon black | 10 | 10 | 10 | 10 | 10 | 10 | 10 | 10 | 10 | 10 | 10 | 10 | 10 | 10 |
| | Silica | 90 | 80 | 100 | 90 | 100 | 90 | 110 | 100 | 110 | 90 | 110 | 80 | 100 | 80 |
| | Silane coupling agent | 7.2 | 6.4 | 8.0 | 7.2 | 8.0 | 7.2 | 8.8 | 8.0 | 8.8 | 7.2 | 8.8 | 6.4 | 8.0 | 6.4 |
| | Oil | 0 | 10 | 10 | 20 | 10 | 20 | 10 | 20 | 10 | 20 | 10 | 20 | 10 | 20 |
| | Styrene resin | 10 | 10 | 10 | 10 | 10 | 10 | 10 | 10 | 10 | 10 | 10 | 10 | 10 | 10 |
| | Wax | 2.5 | 2.5 | 2.5 | 2.5 | 2.5 | 2.5 | 2.5 | 2.5 | 2.5 | 2.5 | 2.5 | 2.5 | 2.5 | 2.5 |
| | Antioxidant | 2.5 | 2.5 | 2.5 | 2.5 | 2.5 | 2.5 | 2.5 | 2.5 | 2.5 | 2.5 | 2.5 | 2.5 | 2.5 | 2.5 |
| | Stearic acid | 2.0 | 2.0 | 2.0 | 2.0 | 2.0 | 2.0 | 2.0 | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 | 2.0 | 2.0 | 2.0 | 2.0 | 2.0 | 2.0 | 2.0 |
| | Sulfur | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 1 | 2.0 | 2.0 | 2.0 | 2.0 | 2.0 | 2.0 | 2.0 | 2.0 | 2.0 | 2.0 | 2.0 | 2.0 | 2.0 | 2.0 |
| | Vulcanization accelerator 2 | 1.5 | 1.5 | 1.5 | 1.5 | 1.5 | 1.5 | 1.5 | 1.5 | 1.5 | 1.5 | 1.5 | 1.5 | 1.5 | 1.5 |
| Negative ratio (%) | | 15 | 10 | 15 | 10 | 16 | 8 | 15 | 10 | 15 | 10 | 15 | 10 | 15 | 10 |
| Nc/Ns | | 1.5 | | 1.5 | | 2.0 | | 1.5 | | 1.5 | | 1.5 | | 1.5 | |
| Sc/Ss | | 1.13 | | 1.11 | | 1.11 | | 1.10 | | 1.22 | | 1.38 | | 1.25 | |
| Plasticizer content | | 57 | 66 | 68 | 77 | 68 | 77 | 69 | 78 | 69 | 77 | 69 | 76 | 68 | 76 |
| Ps/Pc | | 1.16 | | 1.14 | | 1.14 | | 1.13 | | 1.12 | | 1.11 | | 1.12 | |
| (Sc/Ss) × (Ps/Pc) × (Nc/Ns) | | 1.96 | | 1.89 | | 2.52 | | 1.87 | | 2.06 | | 2.29 | | 2.11 | |
| Evaluation | Cornering grip after running on continuous straight road | 112 | | 120 | | 129 | | 129 | | 134 | | 139 | | 123 | |

EP 4 059 737 B1

12

| | | Example 8 | | Example 9 | | Example 10 | | Example 11 | |
|---|---|---|---|---|---|---|---|---|---|
| | | Center | Shoulder | Center | Shoulder | Center | Shoulder | Center | Shoulder |
| Formulation (parts by mass) | SBR | 150 | 150 | 150 | 150 | 150 | 150 | 150 | 150 |
| | Carbon black | 10 | 10 | 10 | 10 | 10 | 10 | 10 | 10 |
| | Silica | 100 | 90 | 100 | 90 | 100 | 90 | 100 | 90 |
| | Silane coupling agent | 8.0 | 7.2 | 8.0 | 7.2 | 8.0 | 7. 2 | 8.0 | 7.2 |
| | Oil | 10 | 25 | 10 | 30 | 10 | 20 | 10 | 20 |
| | Styrene resin | 10 | 10 | 10 | 10 | 10 | 15 | 10 | 20 |
| | Wax | 2.5 | 2.5 | 2.5 | 2.5 | 2.5 | 2.5 | 2.5 | 2.5 |
| | Antioxidant | 2.5 | 2.5 | 2.5 | 2.5 | 2.5 | 2.5 | 2.5 | 2.5 |
| | Stearic acid | 2.0 | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 | 2.0 |
| | Sulfur | 2.0 | 2.0 | 2.0 | 2.0 | 2.0 | 2.0 | 2.0 | 2.0 |
| | Vulcanization accelerator 1 | 2.0 | 2.0 | 2.0 | 2.0 | 2.0 | 2.0 | 2.0 | 2.0 |
| | Vulcanization accelerator 2 | 1.5 | 1.5 | 1.5 | 1.5 | 1.5 | 1.5 | 1.5 | 1.5 |
| Negative ratio (%) | | 15 | 10 | 15 | 10 | 15 | 10 | 15 | 10 |
| Nc/Ns | | 1.5 | | 1.5 | | 1.5 | | 1.5 | |
| Sc/Ss | | 1.11 | | 1.11 | | 1.11 | | 1.11 | |
| Plasticizer content | | 68 | 82 | 68 | 87 | 68 | 77 | 68 | 77 |
| Ps/Pc | | 1.21 | | 1.28 | | 1.14 | | 1.14 | |
| (Sc/Ss) × (Ps/Pc) × (Nc/Ns) | | 2.01 | | 2.14 | | 1.89 | | 1.89 | |
| Evaluation | Cornering grip after running on continuous straight road | 118 | | 120 | | 119 | | 120 | |

[Table 3]

| Formulation (parts by mass) | | Example 12 | | Example 13 | |
|---|---|---|---|---|---|
| | | Center | Shoulder | Center | Shoulder |
| Formulation (parts by mass) | SBR | 150 | 150 | 90 | 90 |
| | BR | 0 | 0 | 40 | 40 |
| | Carbon black | 10 | 10 | 10 | 10 |
| | Silica | 100 | 90 | 100 | 90 |
| | Silane coupling agent | 8.0 | 7.2 | 8.0 | 7.2 |
| | Oil | 10 | 25 | 30 | 45 |
| | Styrene resin | 0 | 0 | 10 | 10 |
| | Terpene resin | 10 | 10 | 0 | 0 |
| | Wax | 2.5 | 2.5 | 2.5 | 2.5 |
| | Antioxidant | 2.5 | 2.5 | 2.5 | 2.5 |
| | Stearic acid | 2.0 | 2.0 | 2.0 | 2.0 |
| | Zinc oxide | 2.0 | 2.0 | 2.0 | 2.0 |
| | Sulfur | 2.0 | 2.0 | 2.0 | 2.0 |
| | Vulcanization accelerator 1 | 2.0 | 2.0 | 2.0 | 2.0 |
| | Vulcanization accelerator 2 | 1.5 | 1.5 | 1.5 | 1.5 |
| Negative ratio (%) | | 15 | 10 | 15 | 10 |
| Nc/Ns | | 1.5 | | 1.5 | |
| Sc/Ss | | 1.11 | | 1.11 | |
| Plasticizer content | | 68 | 82 | 68 | 82 |
| Ps/Pc | | 1.21 | | 1.21 | |
| (Sc/Ss) × (Ps/Pc) × (Nc/Ns) | | 2.01 | | 2.01 | |
| Evaluation | Cornering grip after running on continuous straight road | 128 | | 114 | |

[Table 4]

| Formulation (parts by mass) | | Comparative Example 1 | | Comparative Example 2 | | Comparative Example 3 | | Comparative Example 4 | |
|---|---|---|---|---|---|---|---|---|---|
| | | Center | Shoulder | Center | Shoulder | Center | Shoulder | Center | Shoulder |
| | SBR | 150 | 150 | 150 | 150 | 150 | 150 | 150 | 150 |
| | Carbon black | 10 | 10 | 10 | 10 | 10 | 10 | 10 | 10 |
| | Silica | 100 | 90 | 70 | 60 | 90 | 100 | 100 | 110 |
| | Silane coupling agent | 8.0 | 7.2 | 5.6 | 4.8 | 7.2 | 8.0 | 8.0 | 8.8 |
| | Oil | 10 | 20 | 0 | 0 | 20 | 10 | 10 | 20 |
| | Styrene resin | 10 | 10 | 0 | 10 | 10 | 10 | 10 | 25 |
| | Wax | 2.5 | 2.5 | 2.5 | 2.5 | 2.5 | 2.5 | 2.5 | 2.5 |
| | Antioxidant | 2.5 | 2.5 | 2.5 | 2.5 | 2.5 | 2.5 | 2.5 | 2.5 |
| | Stearic acid | 2.0 | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 | 2.0 |
| | Sulfur | 2.0 | 2.0 | 2.0 | 2.0 | 2.0 | 2.0 | 2.0 | 2.0 |
| | Vulcanization accelerator 1 | 2.0 | 2.0 | 2.0 | 2.0 | 2.0 | 2.0 | 2.0 | 2.0 |
| | Vulcanization accelerator 2 | 1.5 | 1.5 | 1.5 | 1.5 | 1.5 | 1.5 | 1.5 | 1.5 |
| Negative ratio (%) | | 10 | 15 | 15 | 10 | 15 | 10 | 15 | 10 |
| Nc/Ns | | 0.7 | | 1.5 | | 1.5 | | 1.5 | |
| Sc/Ss | | 1.11 | | 1.17 | | 0.90 | | 0.91 | |
| Plasticizer content | | 68 | 77 | 56 | 55 | 77 | 68 | 68 | 79 |
| Ps/Pc | | 1.14 | | 0.99 | | 0.88 | | 1.16 | |
| (Sc/Ss) × (Ps/Pc) × (Nc/Ns) | | 0.84 | | 1.72 | | 1.19 | | 1.58 | |
| Evaluation | Cornering grip after running on continuous straight road | 100 | | 92 | | 99 | | 93 | |

As shown in the tables, excellent cornering grip after running on a continuos straight road was exhibited by the tires of the examples in which the center and shoulder rubbers had a silica content of 80 parts by mass or more and satisfied relationships (1) to (3).

REFERENCE SIGNS LIST

1 motorcycle tire
2 tread portion
2A tread face
2e tread edge
3 sidewall portion
4 bead portion
5 bead core
6 carcass

7 belt layer
8 bead apex
9 tread rubber
9A center rubber
9B shoulder rubber
C tire equator
12 normal line
9D boundary between center rubber 9A and shoulder rubber 9B
11 groove
11A center longitudinal groove
11B beveled groove
11C bypass groove
E1 one end edge
E2 the other end edge
α camber angle
N normal line
L road surface (ground contact surface)
GW groove width
WT tread width

**Claims**

1. A motorcycle tire (1), comprising a tread portion (2) comprising a tread rubber (9), the tread rubber (9) being divided into at least three parts in a tire width direction,

   the tread rubber (9) comprising: a center rubber part (9A) at its center, as viewed in the tire width direction; and shoulder rubber parts (9B) respectively on opposite sides of the center rubber part (9A), as viewed in the tire width direction,
   the center and shoulder rubber parts (9A, 9B) each having a silica content of 80 parts by mass or more per 100 parts by mass of rubber components, **characterized by**
   the center and shoulder rubber parts (9A, 9B) satisfying the following relationships (1), (2), and (3):

$$(1) \ \ Sc > Ss;$$

$$(2) \ \ Pc < Ps;$$

$$(3) \ \ Nc > Ns$$

   wherein Sc represents the silica content of the center rubber part (9A), Ss represents the silica content of the shoulder rubber parts (9B), Pc represents a plasticizer content of the center rubber part (9A), Ps represents a plasticizer content of the shoulder rubber parts (9B), Nc represents a negative groove area ratio of the center rubber part (9A), and Ns represents a negative groove area ratio of the shoulder rubber parts (9B).

2. The motorcycle tire (1) according to claim 1, comprising a groove (11) which passes through a boundary between the center and shoulder rubber parts 9A, 9B) and which does not reach a tire equator.

3. The motorcycle tire (1) according to claim 1 or 2,
   wherein the center and shoulder rubber parts (9A, 9B) each have a silica content of 90 parts by mass or more per 100 parts by mass of the rubber components.

4. The motorcycle tire (1) according to any one of claims 1 to 3,
   wherein the shoulder rubber parts (9B) have a plasticizer content of 80 parts by mass or less per 100 parts by mass of the rubber components.

**5.** The motorcycle tire (1) according to any one of claims 1 to 4,
wherein the shoulder rubber parts (9B) have a styrene-butadiene rubber content of 70% by mass or more based on 100% by mass of the rubber components.

**6.** The motorcycle tire (1) according to any one of claims 1 to 5,

wherein the center rubber part (9A) comprises 1 to 30 parts by mass of one or more solid plasticizers per 100 parts by mass of the rubber components, and
the shoulder rubber parts (9B) comprise 1 to 30 parts by mass of one or more solid plasticizers per 100 parts by mass of the rubber components.

**7.** The motorcycle tire (1) according to claim 6,
wherein the solid plasticizers are styrene or terpene resins.

**8.** The motorcycle tire (1) according to any one of claims 1 to 7,
wherein the shoulder rubber parts (9B) comprise 20 to 80 parts by mass of one or more liquid plasticizers per 100 parts by mass of the rubber components.

**9.** The motorcycle tire (1) according to claim 8,
wherein the liquid plasticizers are oils.

**10.** The motorcycle tire (1) according to any one of claims 1 to 9, wherein Nc and Ns satisfy the following relationship:

$$Nc/Ns \geq 1.3.$$

**11.** The motorcycle tire (1) according to any one of claims 1 to 10,
wherein Nc is 10% or higher, and Ns is 15% or lower.

**12.** The motorcycle tire (1) according to any one of claims 1 to 11,
wherein Sc and Ss satisfy the following relationship:

$$Sc/Ss \geq 1.10.$$

**13.** The motorcycle tire (1) according to any one of claims 1 to 12, wherein Pc and Ps satisfy the following relationship:

$$Ps/Pc \geq 1.00.$$

**14.** The motorcycle tire (1) according to any one of claims 1 to 13,
wherein Sc, Ss, Pc, Ps, Nc, and Ns satisfy the following relationship:

$$(Sc/Ss) \times (Ps/Pc) \times (Nc/Ns) \geq 1.80.$$

**15.** The motorcycle tire (1) according to any one of claims 1 to 14,
wherein the center and shoulder rubber parts (9A, 9B) each have a carbon black content of 1 to 15 parts by mass per 100 parts by mass of the rubber components.

**Patentansprüche**

**1.** Motorradreifen (1), umfassend einen Laufstreifenabschnitt (2), der einen Laufstreifenkautschuk (9) umfasst, wobei der Laufstreifenkautschuk (9) in einer Reifenbreitenrichtung in mindestens drei Teile unterteilt ist,

wobei der Laufstreifenkautschuk (9) umfasst: einen Zentrumskautschukteil (9A) in seinem Zentrum, in der Reifenbreitenrichtung betrachtet; und Schulterkautschukteile (9B), jeweils auf gegenüberliegenden Seiten des Zentrumskautschukteils (9A), in der Reifenbreitenrichtung betrachtet, wobei die Zentrums- und Schulterkautschukteile (9A, 9B) jeweils einen Siliciumdioxidgehalt von 80 Massenteilen oder mehr pro 100 Massenteile an Kautschukkomponenten aufweisen, **dadurch gekennzeichnet, dass** die Zentrums- und Schulterkautschukteile (9A, 9B) den folgenden Verhältnissen (1), (2) und (3) genügen:

$$(1)\ Sc > Ss;$$

$$(2)\ Pc < Ps;$$

$$(3)\ Nc > Ns$$

wobei Sc den Siliciumdioxidgehalt des Zentrumskautschukteils (9A) darstellt, Ss den Siliciumdioxidgehalt der Schulterkautschukteile (9B) darstellt, Pc einen Weichmachergehalt des Zentrumskautschukteils (9A) darstellt, Ps einen Weichmachergehalt der Schulterkautschukteile (9B) darstellt, Nc einen negativen Rillenflächenanteil des Zentrumskautschukteils (9A) darstellt, und Ns einen negativen Rillenflächenanteil der Schulterkautschukteile (9B) darstellt.

2. Motorradreifen (1) nach Anspruch 1, umfassend eine Rille (11), die durch eine Grenze zwischen den Zentrums- und Schulterkautschukteilen (9A, 9B) verläuft, und die einen Reifenäquator nicht erreicht.

3. Motorradreifen (1) nach Anspruch 1 oder 2, wobei die Zentrums- und Schulterkautschukteile (9A, 9B) jeweils einen Siliciumdioxidgehalt von 90 Massenteilen oder mehr pro 100 Massenteile der Kautschukkomponenten aufweisen.

4. Motorradreifen (1) nach einem der Ansprüche 1 bis 3, wobei die Schulterkautschukteile (9B) einen Weichmachergehalt von 80 Massenteilen oder weniger pro 100 Massenteile der Kautschukkomponenten aufweisen.

5. Motorradreifen (1) nach einem der Ansprüche 1 bis 4, wobei die Schulterkautschukteile (9B) einen Styrol-Butadien-Kautschuk-Gehalt von 70 Massenprozent oder mehr aufweisen, bezogen auf 100 Massenprozent der Kautschukkomponenten.

6. Motorradreifen (1) nach einem der Ansprüche 1 bis 5,

   wobei der Zentrumskautschukteil (9A) 10 bis 30 Massenteile eines oder mehrerer fester Weichmacher pro 100 Massenteile der Kautschukkomponenten umfasst, und die Schulterkautschukteile (9B) 1 bis 30 Massenteile eines oder mehrerer fester Weichmacher pro 100 Massenteile der Kautschukkomponenten umfassen.

7. Motorradreifen (1) nach Anspruch 6, wobei die festen Weichmacher Styrol- oder Terpenharze sind.

8. Motorradreifen (1) nach einem der Ansprüche 1 bis 7, wobei die Schulterkautschukteile (9B) 20 bis 80 Massenteile eines oder mehrerer flüssiger Weichmacher pro 100 Massenteile der Kautschukkomponenten umfassen.

9. Motorradreifen (1) nach Anspruch 8, wobei die flüssigen Weichmacher Öle sind.

10. Motorradreifen (1) nach einem der Ansprüche 1 bis 9, wobei Nc und Ns dem folgenden Verhältnis genügen:

$$Nc/Ns \geq 1,3.$$

**11.** Motorradreifen (1) nach einem der Ansprüche 1 bis 10,
wobei Nc 10% oder höher ist, und Ns 15% oder niedriger ist.

**12.** Motorradreifen (1) nach einem der Ansprüche 1 bis 11,
wobei Sc und Ss dem folgenden Verhältnis genügen:

$$Sc/Ss \geq 1{,}10.$$

**13.** Motorradreifen (1) nach einem der Ansprüche 1 bis 12,
wobei Pc und Ps dem folgenden Verhältnis genügen:

$$Ps/Pc \geq 1{,}00.$$

**14.** Motorradreifen (1) nach einem der Ansprüche 1 bis 13,
wobei Sc, Ss, Pc, Ps, Nc und Ns dem folgenden Verhältnis genügen:

$$(Sc/Ss) \times (Ps/Pc) \times (Nc/Ns) \geq 1{,}80.$$

**15.** Motorradreifen (1) nach einem der Ansprüche 1 bis 14,
wobei die Zentrums- und Schulterkautschukteile (9A, 9B) jeweils einen Rußgehalt von 1 bis 15 Massenteilen pro 100 Massenteile der Kautschukkomponenten aufweisen.


**Revendications**

**1.** Pneumatique pour motocyclette (1), comprenant une portion formant bande de roulement (2) comprenant un caoutchouc de bande de roulement (9), le caoutchouc de bande de roulement (9) étant divisé en au moins trois parties dans une direction de la largeur du pneumatique,

le caoutchouc de bande de roulement (9) comprenant : une partie en caoutchouc de centre (9A) au niveau de son centre, telle que vue dans la direction de la largeur du pneumatique ; et des parties en caoutchouc d'épaulement (9B) respectivement sur des côtés opposés de la partie en caoutchouc de centre (9A), telles que vues dans la direction de la largeur du pneumatique, les parties en caoutchouc de centre et d'épaulement (9A, 9B) ayant chacune une teneur en silice de 80 parts en masse ou plus pour 100 parts en masse de composants de caoutchouc,
**caractérisé en ce que**
les parties en caoutchouc de centre et d'épaulement (9A, 9B) satisfont aux relations (1), (2) et (3) suivantes :

$$(1)\ Sc > Ss\ ;$$

$$(2)\ Pc < Ps\ ;$$

$$(3)\ Nc > Ns$$

où Sc représente la teneur en silice de la partie en caoutchouc de centre (9A), Ss représente la teneur en silice des parties en caoutchouc d'épaulement (9B), Pc représente une teneur en plastifiant de la partie en caoutchouc de centre (9A), Ps représente une teneur en plastifiant des parties en caoutchouc d'épaulement (9B), Nc représente un rapport d'aire de rainure négatif de la partie en caoutchouc de centre (9A), et Ns représente un rapport d'aire de rainure négatif des parties en caoutchouc d'épaulement (9B).

**2.** Pneumatique pour motocyclette (1) selon la revendication 1, comprenant une rainure (11) qui passe à travers une frontière entre les parties en caoutchouc de centre et d'épaulement (9A, 9B) et qui n'atteint pas un équateur de pneumatique.

3. Pneumatique pour motocyclette (1) selon la revendication 1 ou 2,
dans lequel les parties en caoutchouc de centre et d'épaulement (9A, 9B) ont chacune une teneur en silice de 90 parts en masse ou plus pour 100 parts en masse des composants de caoutchouc.

4. Pneumatique pour motocyclette (1) selon l'une quelconque des revendications 1 à 3,
dans lequel les parties en caoutchouc d'épaulement (9B) ont une teneur en plastifiant de 80 parts en masse ou moins pour 100 parts en masse des composants de caoutchouc.

5. Pneumatique pour motocyclette (1) selon l'une quelconque des revendications 1 à 4,
dans lequel les parties en caoutchouc d'épaulement (9B) ont une teneur en caoutchouc styrène butadiène de 70 % en masse ou plus sur la base de 100 % en masse des composants de caoutchouc.

6. Pneumatique pour motocyclette (1) selon l'une quelconque des revendications 1 à 5,

dans lequel la partie en caoutchouc de centre (9A) comprend de 1 à 30 parts en masse d'un ou de plusieurs plastifiants solides pour 100 parts en masse des composants de caoutchouc, et
les parties en caoutchouc d'épaulement (9B) comprennent de 1 à 30 parts en masse d'un ou de plusieurs plastifiants solides pour 100 parts en masse des composants de caoutchouc.

7. Pneumatique pour motocyclette (1) selon la revendication 6,
dans lequel les plastifiants solides sont des résines styrène ou terpène.

8. Pneumatique pour motocyclette (1) selon l'une quelconque des revendications 1 à 7,
dans lequel les parties en caoutchouc d'épaulement (9B) comprennent de 20 à 80 parts en masse d'un ou de plusieurs plastifiants liquides pour 100 parts en masse des composants de caoutchouc.

9. Pneumatique pour motocyclette (1) selon la revendication 8,
dans lequel les plastifiants liquides sont des pétroles.

10. Pneumatique pour motocyclette (1) selon l'une quelconque des revendications 1 à 9,
dans lequel Nc et Ns satisfont à la relation suivante :

$$Nc / Ns \geq 1,3.$$

11. Pneumatique pour motocyclette (1) selon l'une quelconque des revendications 1 à 10,
dans lequel Nc est de 10 % ou plus élevé, et Ns est de 15 % ou moins élevé.

12. Pneumatique pour motocyclette (1) selon l'une quelconque des revendications 1 à 11,
dans lequel Sc et Ss satisfont à la relation suivante :

$$Sc / Ss \geq 1,10.$$

13. Pneumatique pour motocyclette (1) selon l'une quelconque des revendications 1 à 12,
dans lequel Pc et Ps satisfont à la relation suivante :

$$Ps / Pc \geq 1,00.$$

14. Pneumatique pour motocyclette (1) selon l'une quelconque des revendications 1 à 13,
dans lequel Sc, Ss, Pc, Ps, Nc et Ns satisfont à la relation suivante :

$$(Sc / Ss) \times (Ps / Pc) \times (Nc / Ns) \geq 1,80.$$

**15.** Pneumatique pour motocyclette (1) selon l'une quelconque des revendications 1 à 14, dans lequel les parties en caoutchouc de centre et d'épaulement (9A, 9B) ont chacune une teneur en noir de carbone de 1 à 15 parts en masse pour 100 parts en masse des composants de caoutchouc.

## FIG.1

## FIG.2

FIG.3

**EP 4 059 737 B1**

**REFERENCES CITED IN THE DESCRIPTION**

**Patent documents cited in the description**

- WO 2019117173 A1
- JP 2020132139 A
- JP 2009298387 A
- JP 2011189808 A